# EUROPÄISCHE PATENTANMELDUNG

(11) **EP 2 289 761 A2**
(43) Veröffentlichungstag der Anmeldung: **02.03.2011**
(21) Anmeldenummer: 10174835.8
(22) Anmeldetag: 01.09.2010
(51) Int. Cl.: B62B 7/12, B62B 9/12, B62K 27/04

(54) **Multifunktions-Kinderwagen**

(30) Priorität: 01.09.2009 DE 202009011871 U
(71) Anmelder: Deutsch, Andreas, 34466 Wolfhagen (DE)
(72) Erfinder: Deutsch, Andreas, 34466 Wolfhagen (DE)
(74) Vertreter: Kleine, Hubertus

(57) **Zusammenfassung**

Die Erfindung betrifft einen Multifunktions-Kinderwagen mit einem Räder (2, 3) aufweisendes Fahrgestell (1) und einer auf diesem angeordneten Fahrgastzelle (4). Der Multifunktions-Kinderwagen zeichnet sich dadurch aus, dass die Fahrgastzelle (4) schwenkbar am Fahrgestell (1) gelagert ist und Mittel zur Einstellung einer Mehrzahl von Schwenklagen der Fahrgastzelle (4) relativ zum Fahrgestell (1) vorgesehen sind.

## Beschreibung

Die Erfindung betrifft einen Multifunktions-Kinderwagen mit einem Räder aufweisenden Fahrgestell und einer auf diesem angeordneten Fahrgastzelle.

Bekannte Kinderwagen dieser Gattung sind mit drei oder vier Rädern versehen und können wahlweise als normale Kinderwagen, insbesondere Sportkinderwagen, oder nach Demontage ihrer Vorderräder als Anhänger für ein Fahrrad verwendet werden (z. B. DE 295 13 198 U1, DE 20 2006 017 998 U1). Kinderwagen dieser Art werden auch als Stroller, Joggingkarren oder dgl. bezeichnet. Außerdem sind diese Kinderwagen meistens demontierbar oder zusammenklappbar ausgebildet.

Zur Erhöhung des Fahrkomforts eines solchen Kinderwagens ist es ferner bekannt, spezielle Kupplungen zu seiner Verbindung mit einem Fahrrad vorzusehen (DE 20 2005 003 581 U1) oder den Kinderwagen mittels Blattfedern federnd an den Radachsen aufzuhängen (DE 202 19 545 U1).

Schließlich sind zahlreiche unterschiedliche Fahrgastzellen für die beschriebenen Kinderwagen bekannt geworden (z. B. DE 203 21 602 U1, EP 1 398 260 A2).

Trotz dieses bekannten Standes der Technik sind Multifunktians-Kinderwagen der eingangs bezeichneten Gattung noch nicht in jeder Hinsicht befriedigend. Insbesondere wird als störend empfunden, dass die Fahrgastzelle sowohl während des Radfahrens oder Joggens als auch beim normalen Schieben des Kinderwagens stets dieselbe Lage einnimmt, obwohl eine flachere Sitz- bzw. Liegeposition für die zu transportierenden Kinder wünschenswert wäre, z. B. bei höheren Geschwindigkeiten oder beim Transport eines schlafenden Kindes. Unbequem ist außerdem die starre Befestigung von Überrollbügeln an den Seiten der Fahrgastzelle, weil diese eine schnelle und vollständige Demontage erschweren, wenn es z. B. erwünscht ist, den Kinderwagen im Kofferraum eines Personenkraftwagens unterzubringen oder platzsparend zu lagern. Weiter ist nicht optimal, dass die Vorderräder, wenn die Kinderwagen als Fahrradanhänger genutzt werden, vollkommen demontiert und gegebenenfalls separat mitgeführt werden müssen. Schließlich weisen derartige Kinderwagen keine ausreichend großen Ablageflächen für Transportgüter auf, so dass hierfür nur die Fahrgastzelle nutzbar ist.

Ausgehend davon liegt der Erfindung das technische Problem zugrunde, einen Muftifunktions-Kinderwagen der eingangs bezeichneten Gattung zu schaffen, der die genannten Mängel zumindest teilweise nicht aufweist und daher einen erhöhten Gebrauchswert besitzt.

Das Problem der veränderbaren Lage der Fahrgastzelle wird erfindungsgemäß dadurch gelöst, dass die Fahrgastzelle schwenkbar am Fahrgestell gelagert ist und Mittel zur Einstellung einer Mehrzahl von Schwenklagen der Fahrgastzelle relativ zum Fahrgestell vorgesehen sind. Dadurch ist es möglich, die Lage der Fahrgastzelle in Abhängigkeit vom Anwendungszweck des Multifunktions-Kinderwagens bzw. von der Befindlichkeit des Kindes zu wählen.

Ferner wird erfindungsgemäß vorgeschlagen, die Fahrgastzelle mit Überrollbügel aufweisenden Seitenteilen derart zu versehen, dass diese nach innen geklappt und dadurch bis auf die Sitz- und/oder Liegefläche der Fahrgastzelle abgesenkt werden können, wodurch eine besonders flache und platzsparende Anordnung der Fahrgastzelle erhalten wird.

Weiter sieht die Erfindung vor, ein Vorderrad des Kinderwagens schwenkbar und mit besonderem Vorteil auch verschiebbar am Fahrgestell zu montieren. Dadurch ist es möglich, die Vorderräder auch dann am Fahrgestell zu belassen, wenn der Kinderwagen als Fahrradanhänger benutzt wird.

Schließlich ist das Fahrgestell mit besonderem Vorteil mit einem vorzugsweise unterhalb der Fahrgastzelle angeordneten Transportmittel versehen, das den zusätzlichen Transport von Gütern sowohl bei montierter als auch bei demontierter Fahrgastzelle ermöglicht.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
- Fig. 1: eine perspektivische Vorderansicht eines erfindungsgemäßen, zum Jog- gen oder Schieben eingerichteten Multifunktions-Kinderwagens;
- Fig. 2: eine perspektivische Hinteransicht des Kinderwagens nach Fig. 1;
- Fig. 3: eine perspektivische Vorderansicht des Kinderwagens nach Fig. 1, je- doch in seiner Funktion als Fahrradanhänger;
- Fig. 4: eine der Fig. 3 entsprechende Ansicht des Kinderwagens nach komplet- ter Demontage einer Fahrgastzelle;
- Fig. 5: eine Seitenansicht, von rechts in Fig. 2 betrachtet, eines Grundrahmens eines Fahrgestells des Kinderwagens nach Fig. 1;
- Fig. 6: eine Vorderansicht des Grundrahmens nach Fig. 5;
- Fig. 7: eine der Fig. 5 entsprechende Seitenansicht des Grundrahmens und ei- nes an diesem montierten Transportmittels;
- Fig. 8: eine der Fig. 7 entsprechende Ansicht nach der Montage von zwei Hin- terrädern und einem Vorderrad am Fahrgestell;
- Fig. 9: eine der Fig. 5 analoge Seitenansicht eines Sitzrahmens des Kinderwa- gens nach Fig. 1;
- Fig. 10: eine Vorderansicht des Sitzrahmens nach Fig. 9 in einer hochge- schwenkten Lage entsprechend Fig. 1;
- Fig. 11: eine perspektivische Ansicht entsprechend Fig. 1 allein des Fahrge- stells und der an diesen schwenkbar befestigten Fahrgastzelle;
- Fig. 12 und 13: den Fig. 5 und 6 entsprechende Ansichten der Kombination aus Fahrgestell und Fahrgastzelle nach Fig. 11;
- Fig. 14: einen Längsschnitt etwa längs der Linie XIV - XIV der Fig. 13;
- Fig. 15 und 16: der Fig. 14 entsprechende Schnitte, wobei die Fahrgastzelle je- doch andere Schwenklagen relativ zum Fahrgestell einnimmt;
- Fig. 17: eine der Fig. 13 entsprechende Ansicht, jedoch bei völlig nach innen geklappten Seitenteilen der Fahrgastzelle;
- Fig. 18: eine Ansicht entsprechend Fig. 8 nach der schwenkbaren Befestigung der Fahrgastzelle am Fahrgestell, wobei sich ein Griff der Fahrgastzelle in einer voll herausgezogenen Position befindet;
- Fig. 19: eine Ansicht entsprechend Fig. 18, wobei sich jedoch der Griff in einer voll eingezogenen Position und das Vorderrad in einer um 90° verschwenkten Lage befindet; und
- Fig. 20: eine der Fig. 19 entsprechende Ansicht, wobei das Vorderrad nicht nur eine um 90° geschwenkte, sondern auch eine zurückgezogene Lage einnimmt.

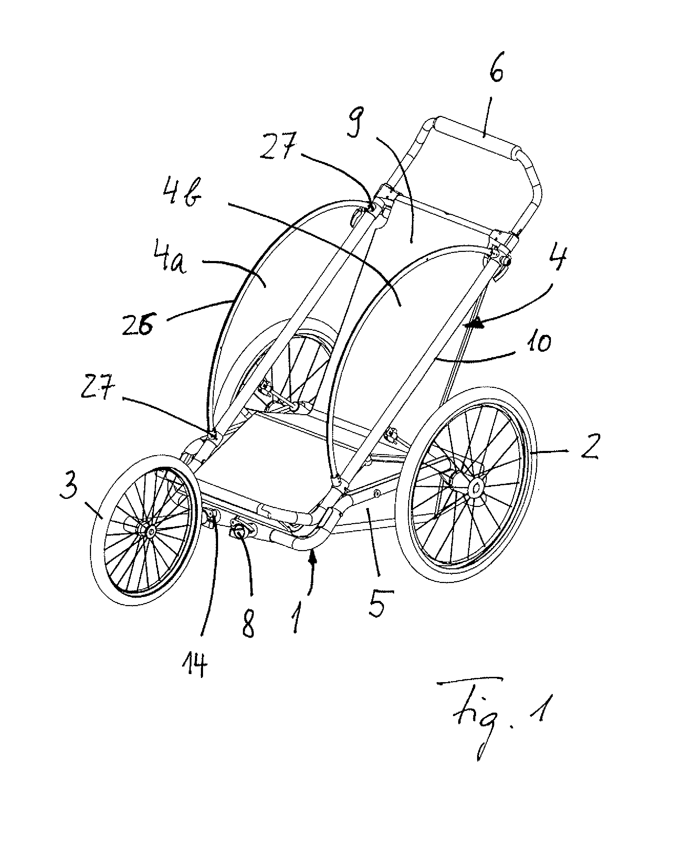

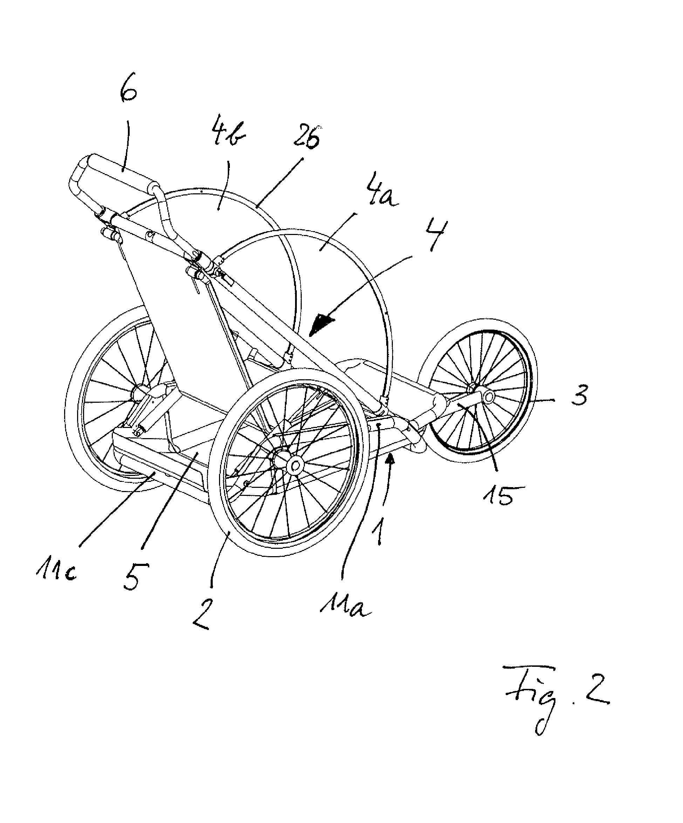

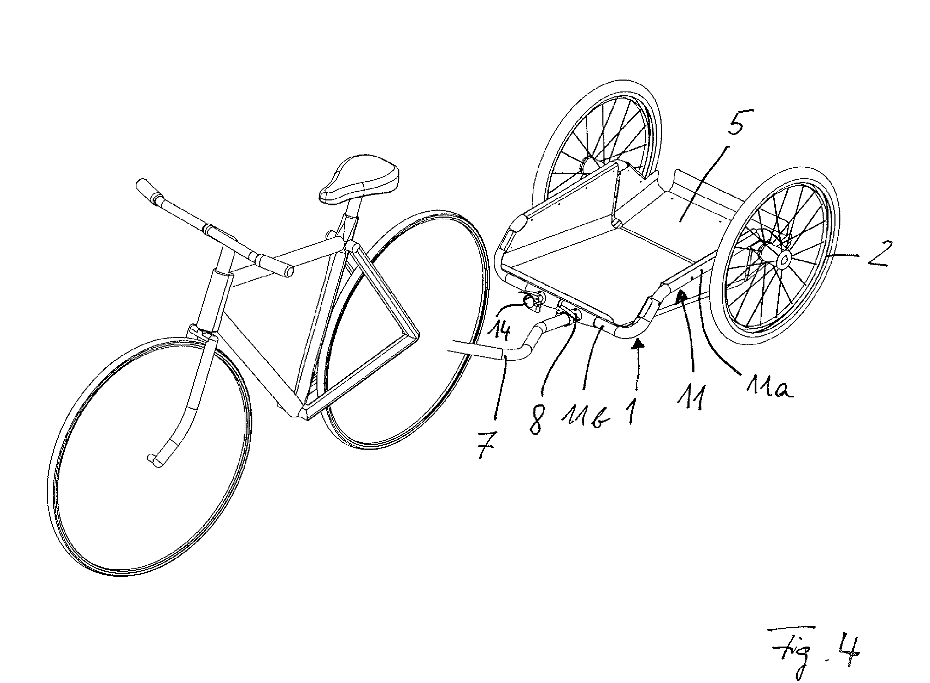

Nach Fig. 1 bis 4 enthält ein erfindungsgemäßer Muitifunktions-Kinderwagen ein Fahrgestell 1, das im Ausführungsbeispiel mit zwei Hinterrädern 2 und einem Vorderrad 3 versehen ist, sowie eine schwenkbar mit dem Fahrgestell 1 verbundene Fahrgastzelle 4. Wie insbesondere Fig. 2 und 4 zeigen, ist am Fahrgestell 1 vorzugsweise auch ein Transportmittel 5 befestigt, das z. B. eine aus Kunststoff oder einem textilen Material bestehende Wanne, aber auch z. B. ein Netz sein kann.

Der Multifunktions-Kinderwagen ermöglicht insbesondere drei Anwendungen.

Eine erste, auch zum Joggen geeignete Anwendung ist die eines üblichen Kinderwagens gemäß Fig. 1 und 2, wobei der Kinderwagen an einem Griff 6 erfasst und geschoben wird.

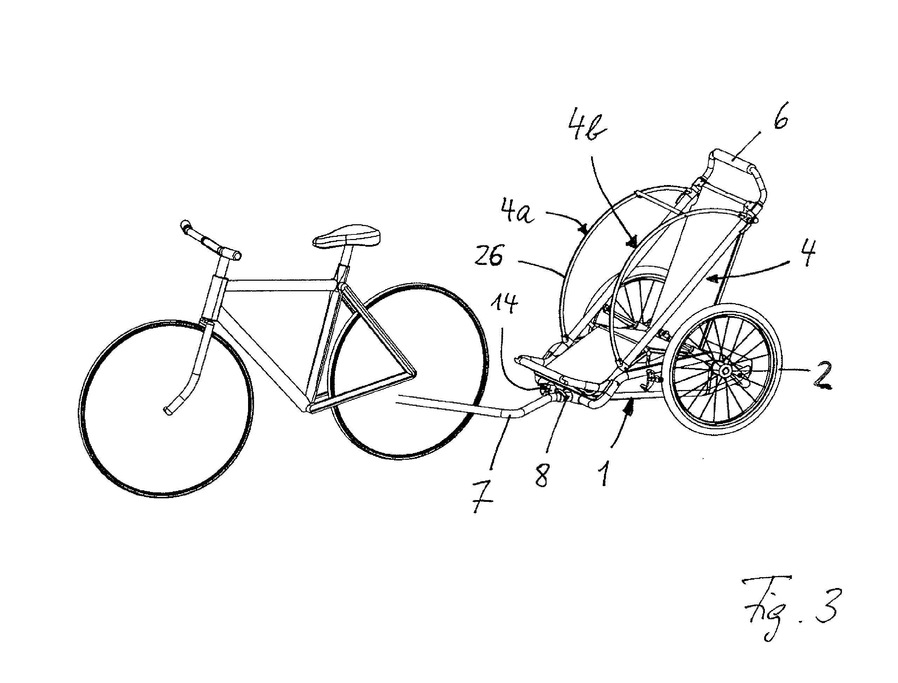

Fig. 3 zeigt die Anwendung des Kinderwagens als Fahrradanhänger, wobei das Vorderrad 3 weggeschwenkt oder entfernt und daher funktionslos ist. Zur Verbindung des Kinderwagens mit dem Fahrrad dient hierbei eine Deichsel 7, deren hinteres Ende in eine rohrförmige, an einem Vorderende des Fahrgestells 1 angebrachte Aufnahme 8 (Fig. 1) gesteckt und in dieser mittels einer Schnellkupplung befestigt werden kann. Die Ankopplung der Deichsel 7 an das Fahrrad kann mit Hilfe üblicher Kupplungen erfolgen (z. B. DE 20 2005 003 581 U1). Sowohl im Fall der Fig. 1 und 2 als auch im Fall der Fig. 3 kann das Transportmittel 5 zum Transport von Lasten verwendet werden.

Schließlich zeigt Fig. 4 die Anwendung des Kinderwagens allein zum Transport von Lasten. Die Fahrgastzelle 4 ist hier vom Fahrgestell 1 entfernt worden, so dass an diesem nur das Transportmittel 5 verbleibt, Denkbar wäre auch, das Transportmittel 5, z. B. eine Transportwanne oder einen anderen Tansportbehälter, nach der Demontage der Fahrgastzelle 4 am Fahrgestell 1 zu befestigen. Das Fahrgestell 1 kann in diesem Zustand entweder gemäß Fig. 4 als Fahrradanhänger verwendet oder mittels der Deichsel 7 nach Art eines Handwagens gezogen werden.

Die Fahrgastzelle 4 ist gemäß Fig. 1 und 2 als übliches Sitzmodul ausgebildet und dazu mit einer textilen Sitz- und/oder Liegefläche 9 versehen, die z. B. mittels Schlaufen und Klettverschlüssen an einem Sitzrahmen 10 der Fahrgastzelle 4 befestigt ist. Da die spezielle Gestaltung des Sitzmoduls und an diesem befestigter Sicherheitsgurte für die zu transportierenden Kinder keinen Teil der Erfindung darstellen, wird insoweit auf die Beschreibung weiterer Einzelheiten verzichtet.

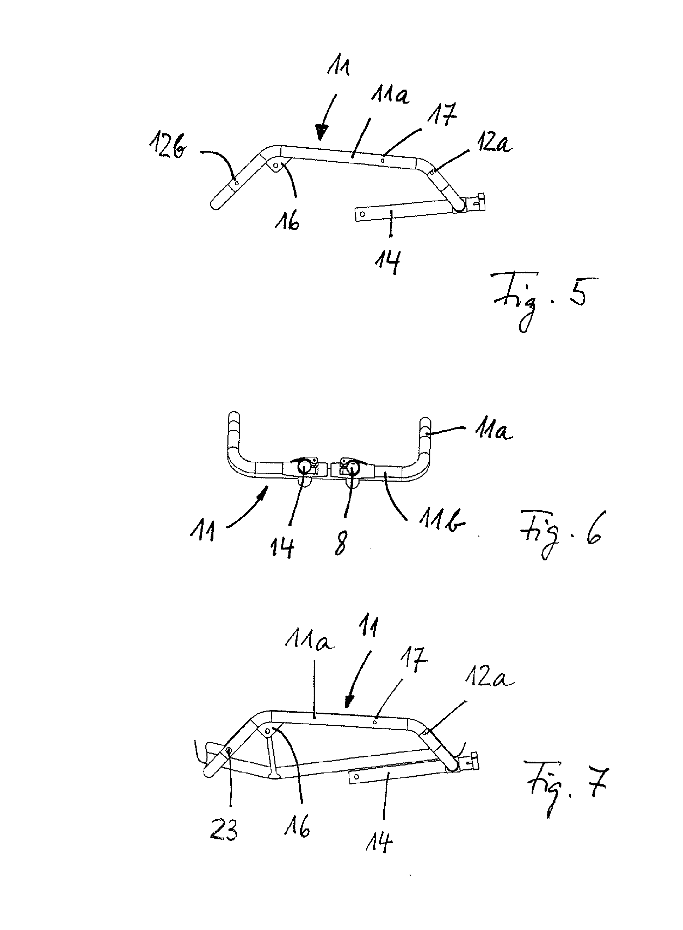

Nach Fig. 5 und 6 enthält das Fahrgestell 1 vorzugsweise einen in der Draufsicht im Wesentlichen rechteckförmigen, auch aus Fig. 4 ersichtlichen Grundrahmen 11. Dieser weist zwei seitliche Rahmenteile 11a, ein diese am Vorderende verbindendes, quer angeordnetes Rahmenteil 11 b und ein die Seitenteile 11a am Hinterende verbindendes, quer angeordnetes Rahmenteil 11c (Fig. 2) auf, wobei die Rahmenteile 11a bis 11c entsprechend den im Einzelfall bestehenden Bedürfnissen gebogen sein können. Das gilt insbesondere für die seitlichen Rahmenteile 11a, die gemäß Fig. 5 einen mittleren, höher gelegenen, geraden Abschnitt aufweisen, der zum Vorder- und Hinterende hin mit je einem schräg nach unten verlaufenden, abgebogenen Abschnitt versehen ist.

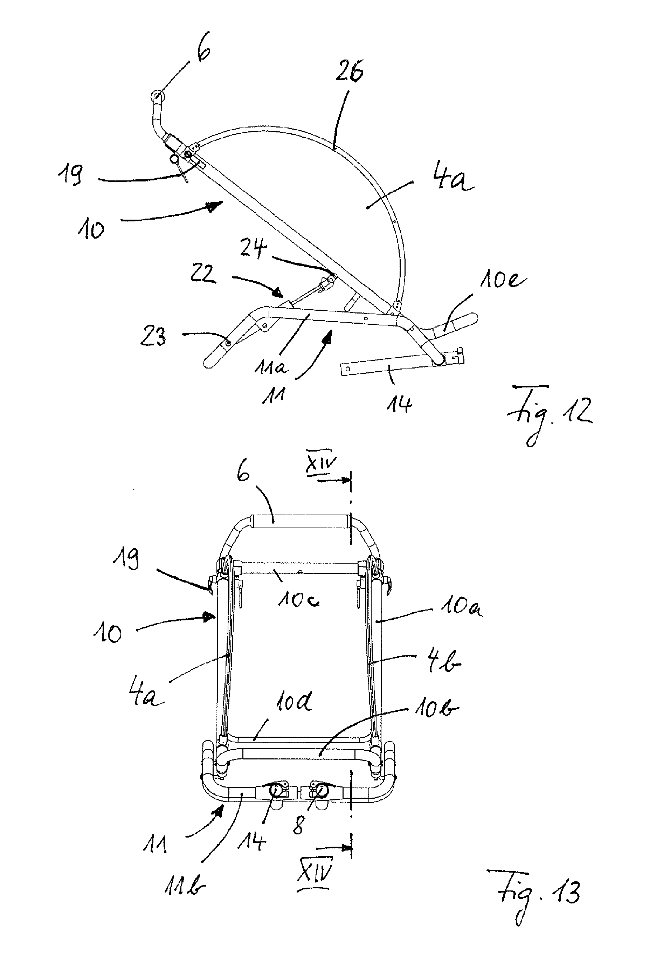

Wie in Fig. 5 weiter schematisch angedeutet ist, sind die seitlichen Rahmenteile 11a vorn und hinten mit Bohrungen 12a und 12b versehen. Die vorderen Bohrungen 12a stellen an Anlenkstellen dar, mittels derer der Sitzrahmen 10, wie weiter unten erläutert ist, schwenkbar mit dem Grundrahmen 11 bzw. Fahrgestell 1 verbunden wird. Dagegen dienen die hinteren Bohrungen 12b zur schwenkbaren Montage von ebenfalls weiter unten beschriebenen Gasdruckfedern 22 (Fig. 12). Außerdem können die Bohrungen 12a und 12b zur Befestigung der Transportmittel 5 am Grundrahmen 11 verwendet werden.

Fig. 5 und 6 zeigen weiter, dass außer der Aufnahme 8 für die Deichsel 7 eine zweite rohrförmige Aufnahme 14 am vorderen Rahmenteil 11b befestigt ist.

Diese dient zur Aufnahme des hinteren Bereichs einer Stange 15 (Fig. 2), an deren Vorderende das Vorderrad 3 drehbar gelagert ist, wie weiter unten näher erläutert wird. Zweckmäßig ist die Aufnahme 14 genauso wie die Aufnahme 8 für die Deichsel 7 ausgebildet und mit ihrer Achse parallel zu einer in Fahrtrichtung ausgerichteten Längsachse des Kinderwagens angeordnet. Gemäß Fig. 6 liegen die beiden Aufnahmen 8 und 14 nebeneinander am vorderen Rahmenteil 11b, weshalb die Aufnahme 8 in Fig. 5 nicht sichtbar ist.

Fig. 7 zeigt den Grundrahmen 11 und das an ihm befestigte Transportmittel 5, die mittels der Bohrungen 12a, 12b und diese durchragender Befestigungsbolzen an den seitlichen Rahmenteilen 11a befestigt ist. Weitere Bohrungen zur Aufnahme von Befestigungsschrauben für das Transportmittel 5 können am vorderen und/oder hinteren Rahmenteil 11b und 11c vorgesehen sein. Außerdem liegt das Transportmittel 5 vorzugsweise mit oberen, umgebogenen Randabschnitten auf den seitlichen Rahmenteilen 11a auf, so dass sie stabil in den Grundrahmen 11 eingehängt ist.

An einem hinteren Ende der seitlichen Rahmenteile 11a sind Montagelaschen 16 vorhanden, die Hülsen tragen, in die Achsstummel gesteckt werden können, auf denen die Hinterräder 2 drehbar gelagert sind. Die Befestigung der Achsstummel im eingesteckten Zustand erfolgt vorzugsweise mit Hilfe von Kugelrasten oder dgl., wie es bei Kinderwagen der hier interessierenden Art an sich bekannt ist.

Schließlich können in den seitlichen Rahmenteilen 11a weitere Bohrungen 17 ausgebildet sein, die zur Befestigung von nicht einzeln dargestellten Bremsen für die Hinterräder 2 dienen.

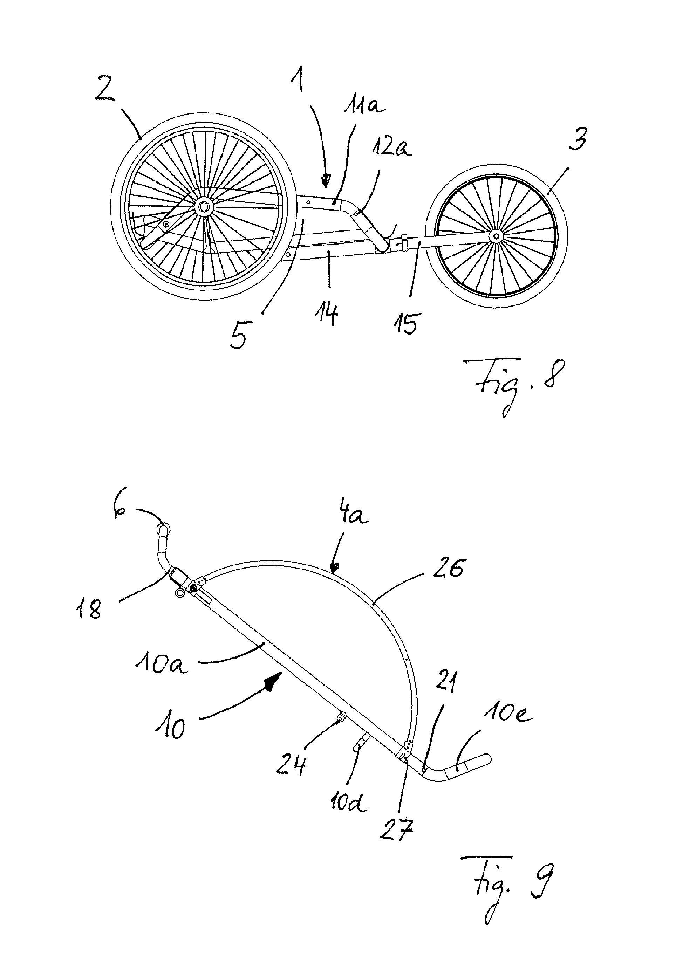

Fig. 8 zeigt den in Fig. 7 dargestellten Grundrahmen 11 nach der Montage der Räder 2 und 3 unter Bildung des Fahrgestells 1. Während die Hinterräder 2 mittels der an ihnen vorgesehenen Steckachsen und der am Grundrahmen 11 befestigten Hülsen leicht montierbar und demontierbar am Fahrgestell 1 befestigt sind, erfolgt die Montage des Vorderrads 3 mit Hilfe der Stange 15 und der Aufnahme 14. Zur Befestigung der Stange 15 in der Aufnahme 14 weisen beide z. B. Querbohrungen auf, durch die ein nicht dargestellter Sicherungsbolzen gesteckt wird, der sowohl den gewünschten Abstand des Vorderrades 3 vom Grundrahmen 11 festlegt als auch die Stange 15 undrehbar in der Aufnahme 14 fixiert. Daher ist auch das Vorderrad 3 auf einfache Weise montierbar bzw. demontierbar.

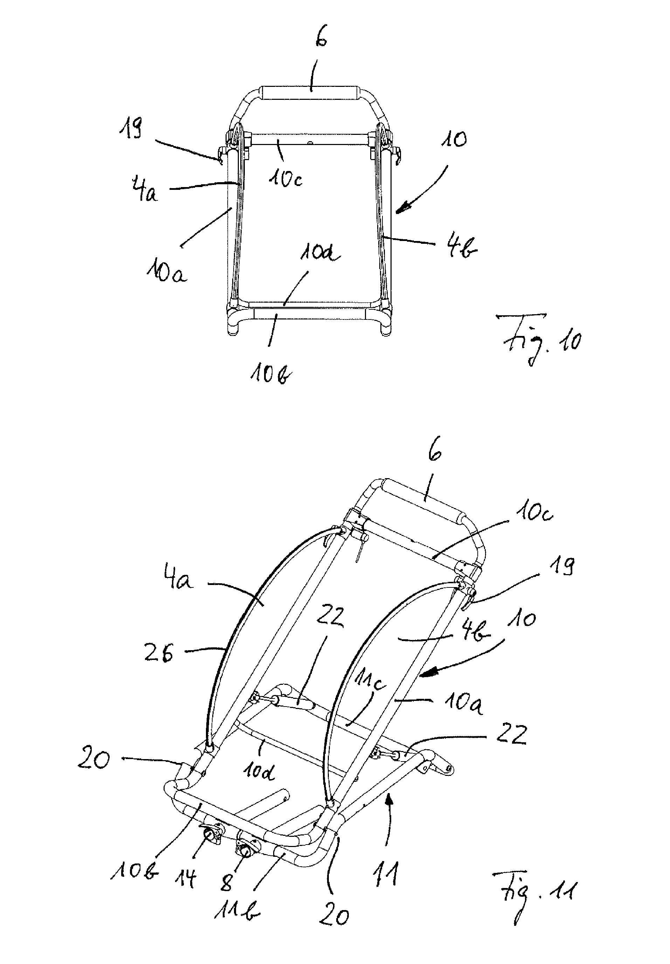

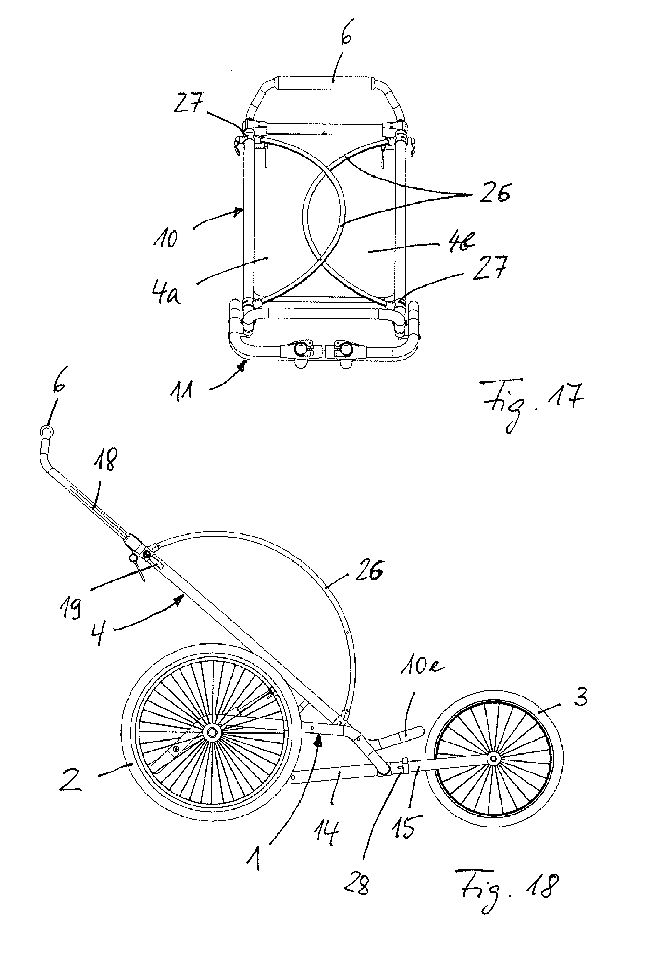

Fig. 9 und 10 zeigen Einzelheiten des Sitzrahmens 10 der Fahrgastzelle 4. Danach enthält der Sitzrahmen 10, der analog zum Grundrahmen 11 in der Draufsicht im Wesentlichen rechteckförmig ausgebildet ist, zwei seitliche Rahmenteile 10a, die an ihren unteren und oberen Enden durch quer angeordnete Rahmenteile 10b und 10c verbunden sind. Außerdem können die Rahmenteile 10a durch ein mittleres, quer verlaufendes Rahmenteil 10d verbunden sein, wenn dies zur Erhöhung der Stabilität und/oder zum Einhängen der Sitz- und/oder Liegefläche 9 erforderlich ist. Zumindest die seitlichen Rahmenteile 10a sind vorzugsweise rohrförmig ausgebildet und an ihren oberen Enden offen. In die offenen Enden werden von oben her zwei mit dem Griff 6 verbundene Stangen 18 gesteckt und mittels nach Art von Klemmelementen ausgebildeten Schnellspannern 19 axial fixiert. Dadurch ist es auf einfache Weise möglich, den Griff 6 in die im Einzelfall erwünschte Höhe zu bringen (vgl. Fig. 9 und 18). Am unteren Ende können die seitlichen Rahmenteile 10a außerdem umgebogene Endabschnitte 10e (Fig. 9) aufweisen, um eine Fußstütze für die im Kinderwagen zu transportierenden Kinder zu schaffen.

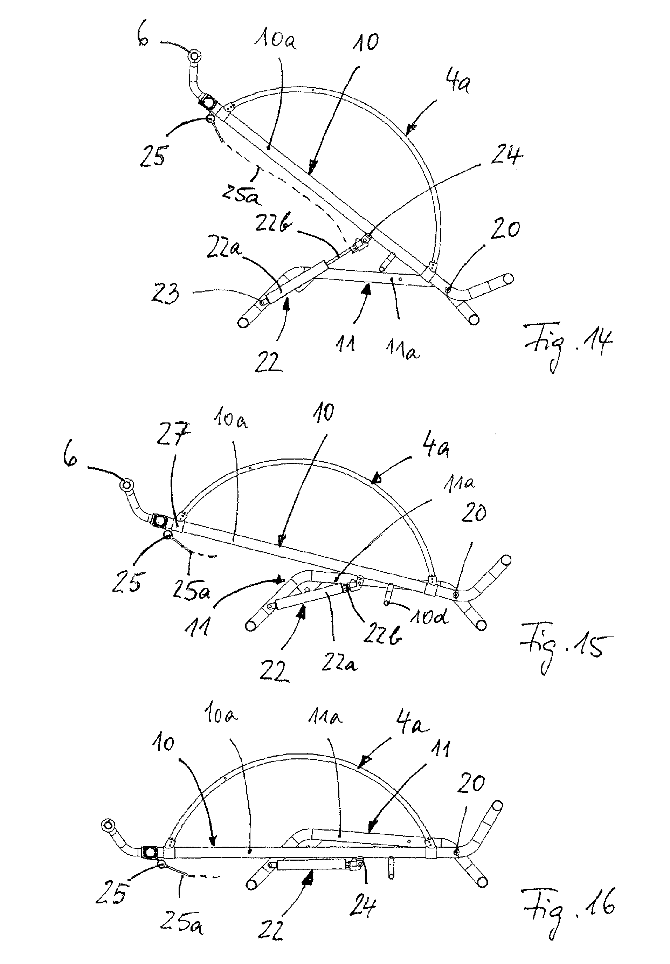

Fig. 11 bis 16 zeigen die erfindungsgemäße schwenkbare Verbindung der Fahrgastzelle 4 mit dem Fahrgestell 1. Die schwenkbare Befestigung erfolgt mit Hilfe von Schwenkbolzen 20 (z. B. Fig. 11 und 14), die die Bohrungen 12a (Fig. 5) des Grundrahmens 11 und Bohrungen 21 (Fig. 9) durchragen, die an unteren Enden der seitlichen Rahmenteile 10a des Sitzrahmens 10 ausgebildet sind. Damit diese Verbindung möglich ist, ist die Breite des Sitzrahmens 10 gemäß Fig. 11 und 13 zumindest im Bereich der Bohrungen 21 etwas schmaler als die Breite des Grundrahmens 11 im Bereich der Bohrungen 12a. Die dadurch ermöglichten Schwenkbewegungen des Sitzrahmens 10 relativ zum Grundrahmen 11 ergeben sich aus Fig. 11 bis 16. Während der Sitzrahmen 10 in Fig. 11 bis 14 einen größten Winkel mit dem Grundrahmen 11 bildet (jeweils bezogen auf die seitlichen Rahmenteile 10a und 11a), zeigt Fig. 15 einen vergleichsweise kleinen Winkel zwischen den Rahmenteilen 10a und 11a. Schließlich zeigt Fig. 16 eine Schwenklage, in welcher die Fahrgastzelle 4 bzw. der Sitzrahmen 10 praktisch völlig nach unten auf das Fahrgestell 1 bzw. den Grundrahmen 11 geschwenkt ist. Dadurch kann z. B. die Schwenklage nach Fig. 11 bis 14 zum normalen Schieben des Kinderwagens, die Schwenklage nach Fig. 15 zum Joggen oder Radfahren und die Schwenklage nach Fig. 16 zum platzsparenden Abstellen des Kinderwagens oder zum Ausbau der Fahrgastzelle 4 verwendet werden. Je nach Bedarf kann dadurch auch eine mehr sitzende oder mehr liegende Lage für die zu transportierenden Kinder hergestellt werden.

Zur Einstellung und Fixierung der im Einzelfall gewünschten Schwenklage zwischen dem Fahrgestell 1 und der Fahrgastzelle 4 können verschiedene Mittel verwendet werden. Eine Möglichkeit besteht z. B. darin, die Seitenteile 10a und 11a mit hinter den Schwenkzapfen 20 liegenden Lochreihen zu versehen und ausgewählte Löcher beider Lochreihen durch starre Stäbe oder dgl. zu verbinden. Alternativ können anstelle der starren Stäbe auch Federelemente verwendet werden, die außer der Einstellung der gewünschten Schwenklage eine federnde Abstützung der Fahrgastzelle 4 auf dem Fahrgestell 1 herbeiführen. Als Federelemente können z. B. Gasdruckfedern verwendet werden, die auf eine gewählte Federkraft eingestellt sind und/oder auf eine härtere oder weichere Federwirkung eingestellt werden können. Besonders gut geeignet für diesen Zweck sind blockierbare Gasfedern. Dadurch ist es möglich, die Gasdruckfedern mit ihren Enden an unverändert bleibenden Anlenkpunkten der Seitenteile 10a und 11a anzulenken. Eine gewünschte Schwenklage kann in diesem Fall durch momentane Aufhebung der Blockierung eingestellt werden. Im Anschluss daran wird die Blockierung wieder hergestellt. Bekannt sind in diesem Zusammenhang sowohl starre als auch federnd blockierbare Gasdruckfedern.

Ein bisher für am besten gehaltenes Ausführungsbeispiel der beschriebenen Einstellmittel wird nachfolgend anhand der Fig. 11 bis 16 näher erläutert. Danach ist ein Ende je einer blockierbaren Gasdruckfeder 22 mit einem die Bohrung 12b (Fig. 5) durchragenden Schwenkbolzen 23 an einem hinteren Ende des rechten bzw. linken seitlichen Rahmenteils 11 a des Grundrahmens 11 schwenkbar befestigt, der wie der Schwenkbolzen 20 gleichzeitig zur Befestigung des Transportmittels 5 am Grundrahmen 11 dient. Das andere Ende der Gasdruckfedern 22 ist dagegen mittels weiterer Schwenkbolzen an je einer Befestigungsöse 24 schwenkbar befestigt, die in je einem mittleren bzw. unteren Bereich der Seitenteile 10a des Sitzrahmens 10 befestigt sind. Im Ausführungsbeispiel handelt es sich bevorzugt um federnd blockierbare Gasdruckfedern (z. B. DE 38 18 065 C2), wie sie z. B. von der Firma Bansbach easylift GmbH mit Sitz in DE-73547 Lorch hergestellt und vertrieben werden. Derartige Gasdruckfedern weisen gemäß Fig. 14 einen mit einem Gas, insbesondere mit Stickstoff oder dgl. gefüllten Zylinder 22a auf, in dem ein mit einer Kolbenstange 22b verbundener Kolben verschiebbar gelagert ist, der einen mit einem steuerbaren Ventil versehenen Durchgang aufweist. Außerdem ist die Kolbenstange 22b von einer mit dem Ventil verbundenen Betätigungsstange durchragt, mittels derer das Ventil von außen her geöffnet und geschlossen werden kann. Bei geöffnetem Ventil kann der Kolben im Zylinder 22a axial verschoben werden, da der Durchgang einen Ausgleich der beidseitig des Kolbens befindlichen Medien erlaubt. Sind das Ventil und damit auch der Durchgang dagegen verschlossen, dann ist ein derartiger Ausgleich nicht mehr möglich und der Kolben im Zylinder 22a blockiert. Der Kolben kann jetzt nur noch in Abhängigkeit vom jeweiligen Gasdruck begrenzt federnd hin- und herbewegt werden, wobei diese Federung weitgehend unabhängig davon ist, an welcher Stelle der Kolben im Zylinder 22a blockiert wurde.

Dieses Prinzip wird für die Zwecke der Erfindung ausgenutzt. Zu diesem Zweck weist der Kinderwagen für jede Gasdruckfeder 22 einen Auslösemechanismus auf, der auf die mit dem Ventil verbundene Betätigungsstange bzw. deren nahe der Befestigungsöse 24 angeordneten Auslösekopf einwirkt. Die Auslösemechanismen können z. B. Bowdenzüge enthalten, die z. B. auf beiden Seiten des Griffs 6 je einen Betätigungshebel haben und über das betreffende Drahtseil eine Auflösung der Blockierung einer zugehörigen Gasdruckfeder 22 ermöglichen. Mit besonderem Vorteil erfolgt die Auslösung jedoch hydraulisch. Hierzu ist rechts und links neben dem Griff 6 je ein Betätigungselement 25, z. B. ein Tastschalter (Fig. 14 bis 16) angeordnet, der über eine nur in Fig. 14 angedeutete, z. B. mit einem Hydrauliköl gefüllte Leitung 25a mit dem am Ende der Kolbenstange 22b vorgesehenen Auslösekopf der Betätigungsstange der rechten bzw. linken Gasdruckfeder 22 verbunden ist. Durch Druck auf das Betätigungselement 25 und unter Vermittlung des Hydrauliköls kann dadurch die jeweilige Betätigungsstange eingedrückt und das Ventil der betreffenden Gasdruckfeder 22 geöffnet werden. Während dieser Phase ist es möglich, analog zu Fig. 14 bis 16 eine beliebige Schwenklage der Fahrgastzelle 4 relativ zum Fahrgestell 1 herzustellen. Werden die Betätigungselemente 25 dann wieder frei gegeben und durch eine Feder oder dgl. in ihrer Ausgangslage zurückgedrückt, dann werden auch die Betätigungsstangen wieder ein- gezogen und die Ventile geschlossen, wodurch die eingestellte Schwenklage fixiert ist. Dennoch kann die Fahrgastzelle 4 nach Art eines Stoßdämpfers geringfügig federnd hin- und herbewegt werden, wodurch der Fahrkomfort des Kinderwagens verbessert wird.

Ist in an sich bekannter Weise (z. B. DE 202 19 545 U1) bereits eine federnde Abstützung des Fahrgestells 1 auf den Hinterrädern 3 vorgesehen, können anstelle der federnd blockierbaren Gasdruckfedern 22 auch starr blockierende Gasdruckfedern oder andere starre Verbindungselemente zwischen der Fahrgastzelle 4 und dem Fahrgestell 1 vorgesehen werden. Die Gasdruckfedern 22 bieten jedoch den besonderen Vorteil, dass auf einfache Weise eine kontinuierliche Veränderung der Schwenklage der Fahrgastzelle 4 möglich ist.

Wie Fig. 1 bis 3 und 9 bis 16 zeigen, enthält die Fahrgastzelle nach einem weiteren bevorzugten Ausführungsbeispiel der Erfindung zwei als Überrollbügel ausgebildete bzw. mit Überrollbügeln versehene Seitenteile 4a und 4b. Diese weisen z. B. je eine konvex nach außen gebogene, massive und aus einem starren Material wie z. B. Stahl bestehende Stange 26 auf. Diese Stangen 26 sind an ihren Enden mit je einer Hülse 27 versehen (Fig. 1 und 17), die auf einem zugehörigen, seitlichen Rahmenteil 10a des Sitzrahmens 10 drehbar gelagert ist, in welchem Fall die Rahmenteile 10a vorzugsweise kreisrunde Außenquerschnitte haben. Die zwischen den Stangen 26 und den Rahmenteilen 10a befindlichen Bereiche der Seitenteile 4a, 4b sind z. B. mit in den Zeichnungen nicht sichtbaren, transparenten Wandverkleidungen abgedeckt.

Aufgrund der beschriebenen Anordnung können die aus den Stangen 26 und den Wandverkleidungen gebildeten Seitenteile 4a, 4b aus einer voll aufgerichteten Position (z. B. Fig. 1, 2 und 16) heraus nach innen in eine Stellung geschwenkt werden, in der sie gemäß Fig. 17 praktisch auf der Sitz- und/oder Liegefläche 9 der Fahrgastzelle 4 aufliegen. Die Schwenkachse liegt hierbei im Wesentlichen parallel zur Längsachse des Kinderwagens bzw. dessen Fahrtrichtung. Dadurch lässt sich die gesamte Fahrgastzelle 4 bei Bedarf zu einem sehr flachen, wenig Raum in Anspruch nehmenden Bauteil zusammenlegen.

Zur Fixierung der Seitenteile 4a, 4b in ihrer hochgeschwenkten Lage nach Fig. 1, 2 und 16 sind vorzugsweise auf die Hülsen 27 einwirkende, lösbare Klemmelemente oder dgl. vorgesehen. Außerdem kann ein nicht gezeigter Abstandhalter vorgesehen sein, der in einem mittleren Bereich zwischen den Stangen 26 angeordnet und an den Stangen 26 befestigt wird, so dass er diese auf Abstand hält.

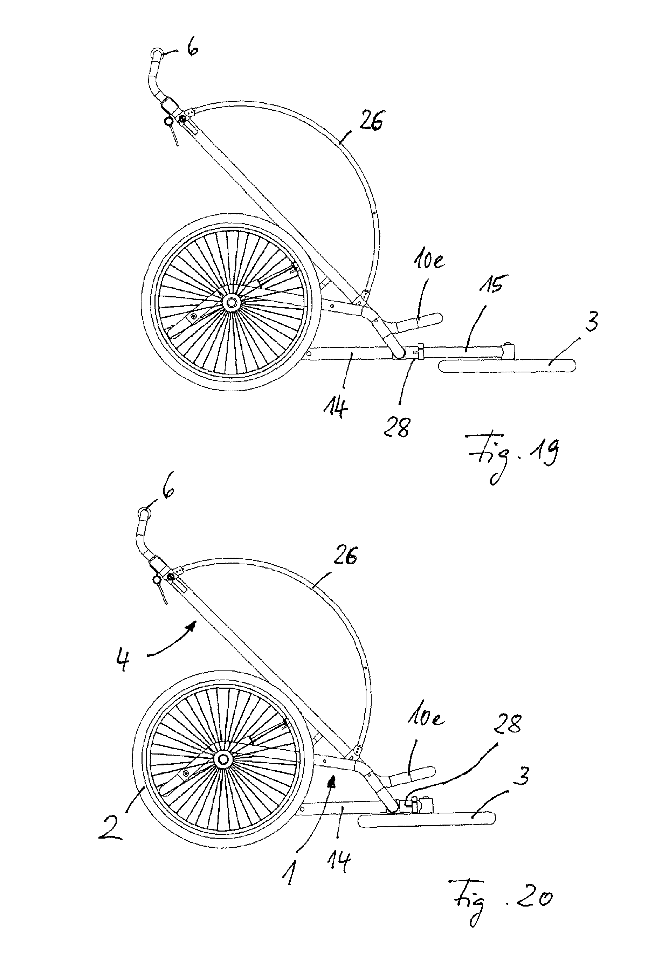

Fig. 18 bis 20 zeigen schließlich ein weiteres bevorzugtes Ausführungsbeispiel der Erfindung. Danach ist die Stange 15, an der das Vorderrad 3 drehbar gelagert ist, drehbar und verschiebbar in der Aufnahme 14 (z. B. Fig. 8 und 18) gelagert. Daher kann die Stange 15 nach dem Lösen des Sicherungsbolzens, mit dem sie während der Benutzung des Vorderrads 3 undrehbar in der Aufnahme 14 festgelegt ist, um eine Achse gedreht werden, die parallel zur Längsachse des Fahrgestells verläuft. Das ist in Fig. 19 für eine um 90° gedrehte Stellung gezeigt. Danach kann die Stange 15 entsprechend Fig. 20 axial tiefer in die Aufnahme 14 geschoben werden, bis sie im Wesentlichen ganz unterhalb des Sitzrahmens 10 angeordnet ist. In dieser Lage kann das Vorderrad 3 z. B. mittels eines auf die Stange 15 wirkenden Schnellspanners 28 fixiert werden, der z. B. aus einem schellenartigen, die Aufnahme 14 umgebenden Bauteil besteht, mittels dessen das geschlitzte Ende der Aufnahme 14 klemmend um die Stange 15 gelegt werden kann. Dadurch ist es möglich, den erfindungsgemäßen Kinderwagen in der aus Fig. 3 und 4 ersichtlichen Weise als Fahrradanhänger zu benutzen, ohne dass das Vorderrad 3 hierzu demontiert werden muss. Die Erfindung ist nicht auf die beschriebenen Ausführungsbeispiele beschränkt, die auf verschiedene Weise abgewandelt werden können. Das gilt zunächst für die in den Zeichnungen dargestellte Form des Fahrgestells 1 und der Fahrgastzelle 4 bzw. des Grund- und des Sitzrahmens 11 bzw. 10. Weiter ist klar, dass die Fahrgastzelle 4 in an sich bekannter Weise (z. B. EP 1 398 260 A2) auch für mehr als ein Kind eingerichtet sein kann. Anstelle der dargestellten, auf den Rahmenteilen 10a drehbar gelagerten Stangen 26 könnten auch geteilte Stangen vorgesehen sein, die um quer zu den Rahmenteilen 10a verlaufende Achsen schwenkbar und zusammenlegbar sind. Weiter können die verschiedenen Einstell-, Auslöse- und Feststellmechanismen anders als beschrieben ausgebildet sein, wobei jeweils schnell betätigbare Mechanismen bevorzugt werden. Dasselbe gilt für die zur schwenkbaren Lagerung der Fahrgastzelle 4 am Fahrgestell 1 verwendeten Mittel, damit bei Bedarf eine schnelle Demontage der gesamten Fahrgastzelle 4 möglich ist. Das Vorderrad 3 kann alternativ an einer z. B. als 4-Kant ausgebildeten Stange 15 mit unrundem Querschnitt drehbar gelagert sein, die ihrerseits in einer Aufnahme 14 mit entsprechend unrundem Querschnitt angeordnet ist. Zur Drehung des Vorderrads 3 um 90° entsprechend Fig. 18 und 19 wäre es dann erforderlich, die Stange 15 zunächst aus der Aufnahme 14 herauszuziehen, dann zu drehen und danach wieder in die Aufnahme 14 einzuführen. Ferner können anstelle des einen Vorderrads 3 auch zwei Vorderräder und anstelle der Räder 2 und 3 auch Zwillingsräder oder dgl. vorgesehen werden. Schließlich versteht sich, dass die verschiedenen Merkmale auch in anderen als den beschriebenen und dargestellten Kombinationen verwendet werden können.

## Patentansprüche

1. Multifunktions-Kinderwagen mit einem Räder (2, 3) aufweisendes Fahrgestell (1) und einer auf diesem angeordneten Fahrgastzelle (4), **dadurch gekennzeichnet, dass** die Fahrgastzelle (4) schwenkbar am Fahrgestell (1) gelagert ist und Mittel zur Einstellung einer Mehrzahl von Schwenklagen der Fahrgastzelle (4) relativ zum Fahrgestell (1) vorgesehen sind.

2. Multifunktions-Kinderwagen nach Anspruch 1, **dadurch gekennzeichnet, dass** die Mittel zur Einstellung der Mehrzahl von Schwenklagen für eine federnde Abstützung der Fahrgastzelle (4) am Fahrgestell (1) eingerichtet sind.

3. Multifunktions-Kinderwagen nach Anspruch 2, **dadurch gekennzeichnet, dass** die Mittel zur Einstellung der Mehrzahl von Schwenklagen wenigstens eine Gasdruckfeder (22) enthalten.

4. Multifunktions-Kinderwagen nach Anspruch 3, **dadurch gekennzeichnet, dass** die Mittel zur Einstellung der Mehrzahl von Schwenklagen wenigstens eine blockierbare Gasdruckfeder (22) enthalten und ein Auslösemechanismus zur Aufhebung der Blockierung vorgesehen ist.

5. Multifunktions-Kinderwagen nach Anspruch 4, **dadurch gekennzeichnet, dass** die Gasdruckfeder (22) eine starr blockierende Gasdruckfeder ist.

6. Multifunktions-Kinderwagen nach Anspruch 4, **dadurch gekennzeichnet, dass** die Gasdruckfeder (22) eine federnd blockierende Gasdruckfeder ist.

7. Multifunktions-Kinderwagen nach einem der Ansprüche 4 bis 6, **dadurch gekennzeichnet, dass** der Auslösemechanismus einen Bowdenzug enthält.

8. Multifunktions-Kinderwagen nach einem der Ansprüche 4 bis 6, **dadurch gekennzeichnet, dass** der Auslösemechanismus hydraulisch ausgebildet ist.

9. Muftifunktions-Kinderwagen nach einem der Ansprüche 1 bis 8, **dadurch gekennzeichnet, dass** die Fahrgastzelle (4) zwei mit Überrollbügeln versehene Seitenteile (4a, 4b) enthält, die nach innen klappbar an der Fahrgastzelle (4) montiert sind.

10. Multifunktions-Kinderwagen nach einem der Ansprüche 1 bis 9, **dadurch gekennzeichnet, dass** das Fahrgestell (1) wenigstens ein Vorderrad (3) aufweist, das um eine Achse schwenkbar am Fahrgestell (1) montiert ist, die parallel zu einer Längsachse des Fahrgestells (1) angeordnet ist.

11. Multifunktions-Kinderwagen nach Anspruch 10, **dadurch gekennzeichnet, dass** das Fahrgestell (1) an seiner Vorderseite mit einer rohrförmigen Aufnahme (14) versehen ist, in der eine das Vorderrad (3) tragende Stange (15) feststellbar gelagert ist.

12. Multifunktions-Kinderwagen nach Anspruch 11, **dadurch gekennzeichnet, dass** die Stange (15) auch parallel zur Längsachse des Fahrgestells (1) verschiebbar in der Aufnahme (14) angeordnet ist.

13. Multifunktions-Kinderwagen nach einem der Ansprüche 1 bis 12, **dadurch gekennzeichnet, dass** das Fahrgestell (1) mit einem vorzugsweise unterhalb des Sitzrahmens (10) angeordneten Transportmittel (5) versehen ist.

14. Multifunktions-Kinderwagen nach einem der Ansprüche 1 bis 13, **dadurch gekennzeichnet, dass** die Fahrgastzelle (4) abnehmbar am Fahrgestell (1) montiert ist.

15. Multifunktions-Kinderwagen nach einem der Ansprüche 1 bis 14, **dadurch gekennzeichnet, dass** das Fahrgestell (1) an einem Vorderende eine rohrförmige Aufnahme (8) für eine Deichsel (7) aufweist.
